# EUROPÄISCHE PATENTSCHRIFT

(11) **EP 3 726 612 B1**
(45) Veröffentlichungstag und Bekanntmachung des Hinweises auf die Patenterteilung: **07.01.2026**
(21) Anmeldenummer: 20168766.2
(22) Anmeldetag: 08.04.2020
(51) Int. Cl.: B60L 58/26, H01M 10/625, H01M 10/6553, H01M 10/6556, B60L 50/64, H01M 10/42, H01M 10/613, H01M 50/209, H01M 50/271, H01M 50/284

(54) **BATTERIE UND VERWENDUNG EINER SOLCHEN**
BATTERY AND USE OF SAME
BATTERIE ET UTILISATION D'UNE TELLE BATTERIE

(30) Priorität: 15.04.2019 DE 102019205388
(43) Veröffentlichungstag der Anmeldung: 21.10.2020
(73) Patentinhaber: Robert Bosch GmbH, 70442 Stuttgart (DE)
(72) Erfinder: Kopp, Benjamin, 71686 Remseck Am Neckar (DE); Schmitt, Markus, 71732 Tamm (DE)

(56) Entgegenhaltungen:
- EP-A1- 2 908 377
- EP-A1- 3 331 055
- DE-A1- 102008 010 808
- DE-A1- 102008 034 887
- DE-A1- 102014 007 638
- DE-A1- 102017 216 785
- US-A1- 2017 040 653

## Beschreibung

### Stand der Technik

Die Erfindung geht aus von einer Batterie. Gegenstand der vorliegenden Erfindung ist auch die Verwendung einer solchen Batterie.

Aus dem Stand der Technik ist es bekannt, dass ein Batteriemodul eine Mehrzahl an einzelnen Batteriezellen aufweist, welche jeweils einen positiven Spannungsabgriff und einen negativen Spannungsabgriff aufweisen, wobei zu einer elektrisch leitenden seriellen und/oder parallelen Verbindung der Mehrzahl an Batteriezellen untereinander die jeweiligen Spannungsabgriffe elektrisch leitend miteinander verbunden sind und somit zu dem Batteriemodul zusammengeschaltet werden. Batteriemodule ihrerseits werden zu Batterien bzw. zu Batteriesystemen zusammengeschaltet. Aufgrund einer Vielzahl an möglichen, verschiedenen Fahrzeugbauräumen sind variable Modulgrößen anzustreben, um den vorhandenen Bauraum optimal ausnutzen zu können.

Weiterhin erwärmen sich die Batteriezellen eines Batteriemoduls, wie beispielsweise Lithium-Ionen-Batteriezellen oder Lithium-Polymer-Batteriezellen, während eines Betriebes bedingt durch chemische Wandlungsprozesse und aufgrund ihres elektrischen Widerstandes bei einer Leistungsabgabe oder einer Leistungsaufnahme. Insbesondere bei einer vergleichbar schnellen Energieabgabe bzw. Energieaufnahme sind diese Prozesse vergleichbar ausgeprägt. Je leistungsfähiger eine Batterie bzw. ein Batteriemodul ist, desto ausgeprägter ist auch die entstehende Erwärmung und damit einhergehend die Anforderungen an ein effizientes Temperiersystem. Um die Sicherheit eines Batteriemoduls zu erhöhen und auch die Leistungsfähigkeit der Batteriezellen sicherzustellen, sind die Batteriezellen eines Batteriemoduls zu heizen und zu kühlen, um diese möglichst in einem bestimmten Temperaturbereich betreiben zu können, sodass beispielsweise ein erhöhtes Alterungsverhalten bzw. eine Zersetzung der Zellchemie verhindert werden kann.

Überwiegend sind die Batteriezellen jedoch zu kühlen.

Beispielsweise kann eine Temperierung, also eine Heizung oder Entwärmung, der Batterie durch eine Flüssigkeitstemperierung mit einem Wasser/Glykol-Gemisch ausgebildet werden. Dabei wird dieses Gemisch durch unterhalb des Batteriemoduls angeordnete Kühlplatten geleitet. Die Kühlplatte kann dabei an eine entsprechende Komponente eines Kühlkreislaufes angeschlossen sein. Eine Kühlstruktur zur Temperierung ist z. B. in DE 10 2008 034887 A1 offenbart.

### Offenbarung der Erfindung

Eine Batterie mit den Merkmalen des unabhängigen Anspruchs bietet den Vorteil, dass eine Temperierung von einzelnen Komponenten der Batterie auf deren jeweilige Bedürfnisse abgestimmt werden kann. Insbesondere durch eine Ausbildung von zwei Temperierräumen können die Anforderungen an die Temperierung einer Mehrzahl an Batteriezellen und von Komponenten der Leistungselektronik getrennt voneinander abgestimmt und optimiert werden.

Dazu wird erfindungsgemäß eine Batterie nach Anspruch 1 zur Verfügung gestellt. Die Batterie umfasst ein erstes Gehäuseelement und ein zweites Gehäuseelement. Das erste Gehäuseelement und das zweite Gehäuseelement bilden gemeinsam einen Innenraum zur Aufnahme eines Batteriemoduls aus. Dabei ist in dem Innenraum eine Mehrzahl an Batteriezellen des Batteriemoduls angeordnet. Die Mehrzahl an Batteriezellen ist elektrisch leitend seriell und/oder parallel miteinander verschaltet. In dem Innenraum ist weiterhin ein erstes Element einer Batteriesteuerung aufgenommen.

Das erste Gehäuseelement bildet auf einer dem Innenraum abgewandten Seite eine erste Temperierstruktur aus. Insbesondere ist die erste Temperierstruktur weiterhin auf einer dem zweiten Gehäuseelement abgewandten Seite ausgebildet.

Das zweite Gehäuseelement ist auf einer dem Innenraum abgewandten Seite mit einem dritten Gehäuseelement verbunden. Das zweite Gehäuseelement und das dritte Gehäuseelement bilden dabei gemeinsam einen von Temperierfluid durchströmbaren zweiten Temperierraum aus. Insbesondere ist das zweite Gehäuseelement auf einer dem ersten Gehäuseelement abgewandten Seite mit dem dritten Gehäuseelement verbunden.

Das dritte Gehäuseelement nimmt dabei ein zweites Element der Batteriesteuerung auf.

Durch die in den abhängigen Ansprüchen aufgeführten Maßnahmen sind vorteilhafte Weiterbildungen und Verbesserungen der im unabhängigen Anspruch angegebenen Vorrichtung möglich.

Insbesondere bietet eine erfindungsgemäße Ausführungsform der Batterie den Vorteil, dass Temperierfluid führende Bauteile außerhalb des Innenraumes angeordnet sind, sodass bei Undichtigkeiten kein Temperierfluid zu den Batteriezellen gelangen kann, wodurch die Sicherheit erhöht werden kann. Zudem ist eine effiziente Kühlung der einzelnen Komponenten möglich, da vergleichbar kurze thermische Pfade ausgebildet sind.

Von Vorteil ist es, wenn das erste Element der Batteriesteuerung zumindest ein elektrisches Bauteil und/oder zumindest ein elektronisches Bauteil (9) des Batteriemoduls umfasst und dass das zweite Element der Batteriesteuerung ein elektrischer Spannungswandler, insbesondere ein Gleichspannungswandler, ist.

Von Vorteil ist es auch, wenn das zweite Element der Batteriesteuerung zumindest ein elektrisches Bauteil und/oder zumindest ein elektronisches Bauteil des Batteriemoduls umfasst und dass das zweite Element der Batteriesteuerung ein elektrischer Spannungswandler, insbesondere ein Gleichspannungswandler, ist.

Es ist zweckmäßig, wenn das erste Gehäuseelement, das zweite Gehäuseelement und/oder das dritte Gehäuseelement jeweils als Druckgussgehäuse ausgebildet sind. Dadurch kann eine mechanisch vergleichbar stabile Ausbildung zur Verfügung gestellt werden. Zudem ist es dadurch möglich, dass Temperfluid führende Bereiche innerhalb der Druckgussbauteile ausgebildet werden können bzw. durch eine Verbindung von zwei Druckgussbauteil miteinander ausgebildet werden, sodass auf zusätzliche Kühlplatten, Heizelemente oder Temperiersysteme verzichtet werden kann.

Von Vorteil ist es, wenn das erste Gehäuseelement und das zweite Gehäuseelement fluiddicht ausgebildet miteinander verbunden sind. Insbesondere ist ein erstes Dichtungselement zwischen dem ersten Gehäuseelement und dem zweiten Gehäuseelement angeordnet. Somit kann ein fluiddicht abgeschlossener Innenraum der Batterie zur Verfügung gestellt werden. Insbesondere können hierdurch die Batteriezellen, das elektrische Bauteil und/oder das elektronische Bauteile vor äußeren Einflüssen geschützt werden.

Gemäß einem bevorzugten Aspekt der Erfindung ist die Mehrzahl an Batteriezellen als prismatische Batteriezellen ausgebildet. Prismatische Batteriezellen weisen hierbei insgesamt sechs Seitenflächen auf, welche paarweise einander gegenüberliegend und parallel zueinander angeordnet sind. Weiterhin sind benachbart zueinander angeordnete Seitenflächen rechtwinklig zueinander angeordnet. Insgesamt ist es möglich, durch die Verwendung von prismatischen Batteriezellen in einer erfindungsgemäßen Batterie eine kompakte Batterie zur Verfügung zu stellen.

Bevorzugt ist, wenn das elektrische Bauteil des Batteriemoduls ein Zellverbinder und/oder eine Leitung ist. Zellverbinder sind dazu ausgebildet, Spannungsabgriffe von Batteriezellen elektrisch leitend seriell und/oder parallel miteinander zu verbinden. Leitungen sind dazu ausgebildet, elektrischen Strom von einem Bauteil zu einem anderen Bauteil zu leiten.

Bevorzugt ist, wenn das elektronische Bauteil des Batteriemoduls ein Schalter, ein Sicherungselement, ein Batteriesteuerungssystem und/oder ein Widerstand ist.

Durch die Anordnung des elektrischen Bauteils und/oder des elektronischen Bauteils innerhalb des Innenraums der Batterie ist es möglich, die Mehrzahl an Batteriezellen des Batteriemoduls elektrisch leitend seriell und/oder parallel miteinander zu verschalten sowie das Batteriemodul zu steuern und zu regeln.

Gemäß einem bevorzugten Aspekt der Erfindung ist das zumindest eine elektronische Bauteil in eine Leiterplatte integriert. Dies bietet den Vorteil einer vergleichbar kompakten Ausbildung, welche weiterhin einfach zu temperieren ist.

Zweckmäßig ist es, wenn ein Abdeckelement an dem ersten Gehäuseelement angeordnet ist. Dabei bilden das Abdeckelement und die erste Temperierstruktur gemeinsam einen von Temperierfluid durchströmbaren ersten Temperierraum aus. Dabei kann die Temperierstruktur beispielsweise unmittelbar thermisch leitend von einem den ersten Temperierraum durchströmenden Temperierfluid umströmt werden.

Dies bietet den Vorteil, dass die erste Temperierstruktur an die Anforderungen hinsichtlich der Temperierung der Mehrzahl an Batteriezellen, welche in dem Innenraum aufgenommen sind, angepasst werden kann. Diese Anpassung kann hierbei unabhängig von der Kühlung des elektrischen Bauteils und/oder des elektronischen Bauteils sowie unabhängig von der Kühlung des elektrischen Spannungswandlers eingestellt werden. Beispielsweise kann die erste Temperierstruktur Strömungsstörelemente oder Strömungsleitelemente umfassen, welche nur dort angeordnet sind, wo sie aufgrund von geforderten Temperaturen der Mehrzahl an Batteriezellen die Temperierung positiv beeinflussen können. Weiterhin können die übrigen Bereiche des ersten Temperierraums hinsichtlich der Strömung und des Druckverlustes optimiert werden. Insbesondere kann auf einen Kompromiss zwischen einer Temperierung der Mehrzahl an Batteriezellen und dem elektrischen Bauteil und/oder dem elektronischen Bauteil sowie dem elektrischen Spannungswandler verzichtet werden, da eine voneinander unabhängige Temperierung dieser Komponenten möglich ist.

Bevorzugt ist das Abdeckelement dabei stoffschlüssig mit dem ersten Gehäuseelement verbunden. Insbesondere kann das Abdeckelement geschweißt oder gelötet mit dem ersten Gehäuseelement verbunden sein. Des Weiteren kann zwischen dem ersten Gehäuseelement und dem Abdeckelement ein zweites Dichtungselement angeordnet sein.

Es ist auch bevorzugt möglich, wenn das Abdeckelement durch das erste Gehäuseelement ausgebildet wird.

Insgesamt bietet dies den Vorteil, dass durch eine solche Ausbildung verhindert werden kann, dass bei Fehlern oder undichten Stellen des ersten Temperierraums, Temperierfluid in den Innenraum zu der Mehrzahl an Batteriezellen gelangen kann.

Vorteilhafterweiße umfasst die Batterie einen ersten Anschluss und einen zweiten Anschluss. Der erste Anschluss ist dabei dazu ausgebildet, der Batterie das Temperierfluid zuzuführen und der zweite Anschluss ist dabei dazu ausgebildet, dass Temperierfluid von der Batterie abzuführen.

Insbesondere bilden der erste Anschluss und der zweite Anschluss eine Schnittstelle zu einem Kraftfahrzeug.

Gemäß einem ersten Aspekt kann das Temperierfluid die erste Temperierfluidaufnahme und die zweite Temperierfluidaufnahme seriell durchströmen. Dabei strömt das Temperierfluid beispielsweise zunächst durch die erste Temperierfluidaufnahme und anschließend durch die zweite Temperierfluidaufnahme.

Gemäß zweiten Aspekt der Erfindung kann das Temperierfluid die erste Temperierfluidaufnahme und die zweite Temperierfluidaufnahme parallel durchströmen. Dabei wird das Temperierfluid nach einem Durchströmen des ersten Anschlusses in einen ersten Teilstrom aufgeteilt, welcher die erste Temperierfluidaufnahme durchströmt, und in einem zweiten Teilstrom aufgeteilt, welcher die zweite Temperierfluidaufnahme durchströmen. Der erste Teilstrom und der zweite Teilstrom werden nach einem Durchströmen des jeweiligen Temperierraums wieder zusammengeführt und mittels des zweiten Anschlusses aus der Batterie herausgeführt. Hierdurch kann bspw. der Druckverlust minimiert werden.

Hierbei weisen das erste Gehäuseelement sowie das zweite Gehäuseelement und das dritte Gehäuseelement jeweils einen Temperierfluideinlass und einen Temperierfluidauslass auf. Der jeweilige Temperierfluideinlass dient dazu, Temperierfluid in den ersten Strömungsraum bzw. den zweiten Strömungsraum einzulassen, und der jeweilige Temperierfluidauslass dient dazu, Temperierfluid aus dem ersten Strömungsraum bzw. dem zweiten Strömungsraum auszulassen. Weiterhin können ein Temperierfluidauslass und ein Temperierfluideinlass fluidleitend miteinander verbunden sein, sodass Temperierfluids zwischen dem ersten Strömungsraum und den zweiten Strömungsraum oder umgekehrt strömen kann.

Beispielsweise kann der Temperierfluideinlass des zweiten Gehäuseelements und/oder des dritten Gehäuseelements den ersten Anschluss der Batterie ausbilden, sodass Temperierfluid hierdurch in den zweiten Strömungsraum einströmen kann. Weiterhin kann beispielsweise der Temperierfluidauslass des zweiten Gehäuseelements und/des dritten Gehäuseelements fluidleitend mit dem Temperierfluideinlass des ersten Gehäuseelements verbunden sein, sodass Temperierfluid zuerst den zweiten Strömungsraum und anschließend den ersten Strömungsraum durchströmen kann, also eine serielle Durchströmung ausgebildet ist. Zudem kann beispielsweise der Temperierfluidauslass des ersten Gehäuseelements den zweiten Anschluss der Batterie ausbilden, sodass hierdurch Temperierfluid den ersten Strömungsraum verlassen kann.

Beispielsweise kann der Temperierfluideinlass des ersten Gehäuseelements den ersten Anschluss der Batterie ausbilden, sodass Temperierfluid hierdurch in den ersten Strömungsraum einströmen kann. Weiterhin kann beispielsweise der Temperierfluidauslass des ersten Gehäuseelements fluidleitend mit dem Temperierfluideinlass des zweiten Gehäuseelements und/oder des dritten Gehäuseelements verbunden sein, sodass Temperierfluid zuerst den ersten Strömungsraum und anschließend den zweiten Strömungsraum durchströmen kann, also eine serielle Durchströmung ausgebildet ist. Zudem kann beispielsweise der Temperierfluidauslass des zweiten Gehäuseelements und/oder des dritten Gehäuseelements den zweiten Anschluss der Batterie ausbilden, sodass hierdurch Temperierfluid den zweiten Strömungsraum verlassen kann.

Es ist zweckmäßig, wenn das zweite Gehäuseelement eine zweite Temperierstruktur ausbildet und/oder wenn das dritte Gehäuseelement eine dritte Temperierstruktur ausbildet. Dadurch ist es möglich, die zweite Temperierstruktur und/oder die dritte Temperierstruktur an die Anforderungen hinsichtlich der Kühlung des elektrischen Bauteils und oder/des elektronischen Bauteils sowie des elektrischen Spannungswandlers anzupassen. Insbesondere kann diese Anpassung unabhängig von den Anforderungen an die Zellkühlung erfolgen. Die zweite Temperierstruktur und oder/die dritte Temperierstruktur können beispielsweise als Strömungsleitelemente oder als Strömungsstörelemente ausgebildet sein, wobei die zweite Temperierstruktur und/oder die dritte Temperierstruktur an solchen Stellen angeordnet werden, welche eine vergleichbar intensive Temperierung erfordern. Die übrigen Bereiche des zweiten Temperierraums können hinsichtlich Druck oder Strömungsführung optimiert werden. Insbesondere kann auf einen Kompromiss zwischen einer Temperierung der Mehrzahl an Batteriezellen und dem elektrischen Bauteil und/oder dem elektronischen Bauteil sowie dem elektrischen Spannungswandler verzichtet werden, da eine voneinander unabhängige Temperierung dieser Komponenten möglich ist.

Dabei kann weiterhin zwischen dem zweiten Gehäuseelement und dem dritten Gehäuseelement insbesondere ein drittes Dichtungselement angeordnet sein. Beispielsweise können das zweite Gehäuseelement und/oder das dritte Gehäuseelement hierzu entsprechende Aufnahmen für das dritte Dichtungselement ausbilden, in welchen das Dichtungselement aufgenommen werden kann. Beispielsweise kann eine solche entsprechende Aufnahme als eine Dichtungsnut ausgeführt werden. Durch eine Verbindung des zweiten Gehäuseelements und des dritten Gehäuseelements kann das dritte Dichtungselement zu einer Abdichtung entsprechend verpresst werden. Somit kann der zweite Temperierraum gegenüber einer Umgebung entsprechend abgedichtet werden. Insbesondere ist es hierdurch möglich zu verhindern, dass bei einer möglichen Leckage des zweiten Temperierraums Temperierfluid in den Innenraum zu der Mehrzahl an Batteriezellen gelangt.

Bevorzugt sind die erste Temperierstruktur, die zweite Temperierstruktur und/oder die dritte Temperierstruktur jeweils als Strömungsleitelemente, als Strömungsstörelemente oder als Strömungsbegrenzungen ausgebildet.

Insbesondere können die erste Temperierstruktur, die zweite Temperierstruktur und/oder die dritte Temperierstruktur jeweils durch das entsprechende Druckgussgehäuse ausgebildet werden.

An dieser Stelle sind unter Strömungsleitelementen solche innerhalb eines jeweiligen Temperierraums angeordnete Elemente zu verstehen, welche dazu dienen, eine Strömung ohne eine vergleichbare Erhöhung der Turbulenz umzuleiten. An dieser Stelle sind unter Strömungsstörelementen solche innerhalb eines jeweiligen Temperierraums angeordnete Elemente zu verstehen, welche dazu dienen, die Turbulenz einer Strömung zu erhöhen, insbesondere einen Übergang von einer laminaren zu einer turbulenten Strömung herbeizuführen, um jedoch eine verbesserte Wärmeabfuhr zu bewirken.

An dieser Stelle sind unter Strömungsbegrenzungen solche Elemente zu verstehen, welche den jeweiligen Temperierraum mechanisch begrenzen.

Insbesondere sei hierzu angemerkt, dass die zweite Temperierstruktur und die dritte Temperierstruktur gemeinsam ein den zweiten Strömungsraum durchströmendes Temperierfluids beeinflussen können.

Von Vorteil ist es, wenn die Mehrzahl an Batteriezellen thermisch leitend mit einer ersten Innenseite des Innenraumes verbunden ist, wobei die erste Innenseite unmittelbar benachbart zu der ersten Temperierstruktur angeordnet ist. Insbesondere kann hierbei zwischen der Mehrzahl an Batteriezellen und der Innenseite ein erstes thermisches Ausgleichselement, wie beispielsweise ein thermisch leitfähiger Klebstoff, angeordnet sein.

Von Vorteil ist es auch, wenn das elektrische Bauteil und/oder das elektronische Bauteil thermisch leitend mit einer zweiten Innenseite des Innenraums verbunden ist, wobei die zweite Innenseite unmittelbar benachbart dem zweiten Temperierraum angeordnet ist. Insbesondere kann hierbei zwischen dem elektrischen Bauteil und/oder dem elektronischen Bauteil ein zweites thermisches Ausgleichselement, wie beispielsweise ein thermisch leitfähiger Klebstoff oder ein sogenanntes thermal interface material (TIM), angeordnet sein.

Beispielsweise durch eine Verbindung einer das elektronische Bauteil umfassenden Leiterplatte mit dem zweiten Gehäuseelement, beispielsweise mittels Schrauben, kann eine zuverlässige thermische Leitung ausgebildet werden. Insgesamt ergibt sich hierdurch ein vergleichbar kurzer thermischer Pfad zwischen einem den zweiten Temperierraum durchströmenden Temperierfluid und der Leiterplatte mit einem somit vergleichbar niedrigen thermischen Widerstand.

Von Vorteil ist es weiterhin, wenn der elektrische Spannungswandler thermisch leitend mit einer dritten Innenseite des dritten Gehäuseelements verbunden ist, wobei die dritte Innenseite unmittelbar benachbart zu dem zweiten Temperierraum angeordnet ist. Hierbei kann zwischen dem elektrischen Spannungswandler und der dritten Innenseite weiterhin ein drittes thermisches Ausgleichsmaterial, wie beispielsweise ein thermisch leitfähiger Klebstoff oder ein sogenanntes thermal interface material (TIM), angeordnet sein. Durch eine Verbindung, wie beispielsweise mittels Schrauben, des elektrischen Spannungswandlers dem dritten Gehäuseelement kann eine zuverlässige thermische Leitung ausgebildet werden. Insgesamt ergibt sich hierdurch ein vergleichbar kurzer thermischer Pfad zwischen einem den zweiten Temperierraum durchströmenden Temperierfluid und dem elektrischen Spannungswandler mit einem somit vergleichbar niedrigen thermischen Widerstand.

Gegenstand der vorliegenden Erfindung ist auch die Verwendung einer eben beschriebenen erfindungsgemäßen Batterie zur Temperierung und insbesondere zur Kühlung der Mehrzahl an Batteriezellen, des elektrischen Bauteils und/oder des elektronischen Bauteils und/oder des elektrischen Spannungswandlers, wobei ein als Temperierflüssigkeit oder Temperiergas ausgebildetes Temperierfluid die erste Temperierstruktur umströmt oder wobei das als Temperierflüssigkeit ausgebildete Temperierfluid den zweiten Temperierraum durchströmt.

### Kurze Beschreibung der Zeichnungen

Ausführungsbeispiele der Erfindung sind in den Zeichnungen dargestellt und in der nachfolgenden Beschreibung näher erläutert.

Es zeigt:
- Figur 1: in einer perspektivischen Ansicht eine erfindungsgemäße Ausführungsform einer Batterie,
- Figur 2: in einer Schnittansicht die erfindungsgemäße Ausführungsform der Batterie gemäß Figur 1,
- Figur 3: in einer perspektivischen Ansicht eine Untersicht einer Ausführungsform eines ersten Gehäuseelements einer erfindungsgemäßen Batterie,
- Figur 4: in einer perspektivischen Ansicht eine Draufsicht der Ausführungsform des ersten Gehäuseelements der erfindungsgemäßen Batterie gemäß Figur 3,
- Figur 5: in einer perspektivischen Ansicht eine Draufsicht einer Ausführungsform eines zweiten Gehäuseelements einer erfindungsgemäßen Batterie,
- Figur 6: in einer perspektivischen Ansicht eine Untersicht der Ausführungsform des zweiten Gehäuseelements erfindungsgemäßen Batterie gemäß Figur 5,
- Figur 7: in einer perspektivischen Ansicht eine Untersicht einer Ausführungsform eines dritten Gehäuseelements einer erfindungsgemäßen Batterie,
- Figur 8: in einer perspektivischen Ansicht eine Draufsicht der Ausführungsform des dritten Gehäuseelements der erfindungsgemäßen Batterie gemäß Figur 8,
- Figur 9: in einer perspektivischen Ansicht eine erste Explosionsdarstellung eines Ausschnitts einer erfindungsgemäßen Batterie und
- Figur 10: in einer perspektivischen Ansicht eine zweite Explosionsdarstellung eines Ausschnitts einer erfindungsgemäßen Batterie.

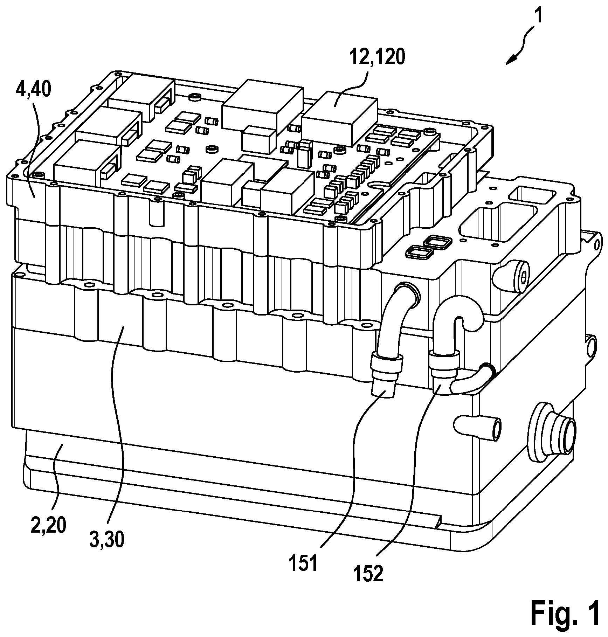

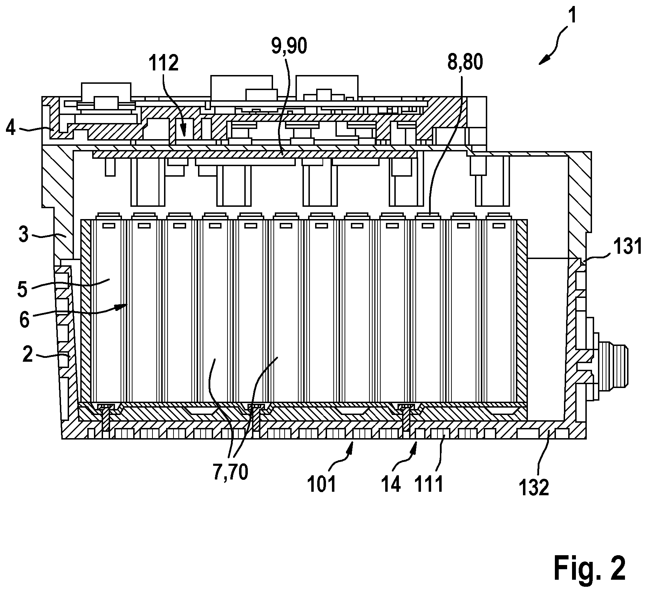

Die Figur 1 zeigt in einer perspektivischen Ansicht eine erfindungsgemäße Ausführungsform einer Batterie 1. Die Figur 2 zeigt diese erfindungsgemäße Ausführungsform der Batterie 1 gemäß Figur 1 in einer Schnittansicht. Die Figuren 1 und 2 sollen nun gemeinsam beschrieben sein.

Die Batterie 1 umfasst ein erstes Gehäuseelement 2, ein zweites Gehäuseelement 3 und ein drittes Gehäuseelement 4. Gemäß der in den Figuren 1 und 2 gezeigten Ausführungsform der Batterie 1 ist das erste Gehäuseelement 2 als Druckgussgehäuse 20 ausgebildet, das zweite Gehäuseelement 3 als Druckgussgehäuse 30 ausgebildet und das dritte Gehäuseelement 4 als Druckgussgehäuse 40 ausgebildet.

Das erste Gehäuseelement 2 und das zweite Gehäuseelement 3 bilden gemeinsam einen Innenraum 5 zur Aufnahme eines Batteriemoduls 6 aus. Insbesondere in der Schnittansicht gemäß Figur 2 sind der Innenraum 5 und das Batteriemodul 6 zu erkennen. Insbesondere sind das erste Gehäuseelement 2 und das zweite Gehäuseelement 3 fluiddicht ausgebildet miteinander verbunden. Insbesondere ist zwischen dem ersten Gehäuseelement 2 und dem zweiten Gehäuseelement 3 ein erstes Dichtungselement 131. Insbesondere können das erste Gehäuseelement 2 und das zweite Gehäuseelement 3 geschraubt miteinander verbunden sein.

In dem Innenraum 5 ist eine Mehrzahl an Batteriezellen 7 aufgenommen. Die Mehrzahl an Batteriezellen 7 des Batteriemoduls 6 ist dabei elektrisch leitend seriell und/oder parallel miteinander verschaltet. Bevorzugt ist, wie insbesondere aus der Figur 2 zu erkennen, die Mehrzahl an Batteriezellen 7 als prismatische Batteriezellen 70 ausgebildet.

Weiterhin sind in dem Innenraum 5 elektrische Bauteile 8 des Batteriemoduls 6 und elektronische Bauteile 9 des Batteriemoduls 6 aufgenommen. Beispielsweise können die elektrischen Bauteile 8 Zellverbinder 80 sein, welche die Mehrzahl an Batteriezellen 7, 70 elektrisch leitend seriell und/oder parallel miteinander verschaltet. Weiterhin können die elektrischen Bauteile 8 Leitungen sein, welche elektrischen Strom führen. Beispielsweise können die elektronischen Bauteile 9 des Batteriemoduls 6 Schalter, Sicherungselemente, Batteriesteuerungssysteme und/oder Widerstände sein. Besonders bevorzugt sind die elektronischen Bauteile 9, wie aus der Figur 2 zu erkennen ist, zumindest teilweise in eine Leiterplatte 90 integriert.

Das erste Gehäuseelement 2 bildet auf einer dem Innenraum 5 abgewandten Seite eine erste Temperierstruktur 101 aus. Insbesondere bei der Ausführungsform gemäß den Figuren 1 und 2 ist die erste Temperierstruktur 101 auf einer dem zweiten Gehäuseelement 3 abgewandten Seite des ersten Gehäuseelements 2 angeordnet. Weiterhin zeigt die Figur 2 auch, dass ein Abdeckelement 14 an dem ersten Gehäuseelement 2 angeordnet ist. Dabei bilden das Abdeckelement 14 und das erste Gehäuseelement 2 gemeinsam einen von Temperierfluid durchströmbaren ersten Temperierraum 111 aus. Die erste Temperierstruktur 101 ist dabei innerhalb des ersten Temperierraums 111 angeordnet. Insbesondere kann das Abdeckelement 14 stoffschlüssig mit dem ersten Gehäuseelement 2 verbunden sein. Dabei kann weiterhin bevorzugt ein zweites Dichtungselement 132 zwischen dem ersten Gehäuseelement 2 und dem Abdeckelement 14 angeordnet sein.

Das zweite Gehäuseelement 3 ist auf einer dem Innenraum 5 abgewandten Seite mit dem dritten Gehäuseelement 4 verbunden. Insbesondere ist das zweite Gehäuseelement 3 auf einer dem ersten Gehäuseelement 2 abgewandten Seite mit dem dritten Gehäuseelement 4 verbunden. Dabei sind das zweite Gehäuseelement 3 und das dritte Gehäuseelement 4 unter Ausbildung eines von einem Temperierfluid durchströmbaren zweiten Temperierraums 112 miteinander verbunden.

Das dritte Gehäuseelement 4 nimmt dabei einen elektrischen Spannungswandler 12 auf. Insbesondere ist der elektrische Spannungswandler 12 ein Gleichspannungswandler 120.

Weiterhin zeigt insbesondere die Figur 1, dass die Batterie 1 einen ersten Anschluss 151 und einen zweiten Anschluss 152 aufweist. Der erste Anschluss 151 ist dabei dazu ausgebildet, der Batterie 1 Temperierfluid zuzuführen und der zweite Anschluss 152 ist dabei dazu ausgebildet, Temperierfluid von der Batterie 1 abzuführen. Dabei kann das Temperierfluids die Batterie 1 und insbesondere den ersten Temperierraum 111 und den zweiten Temperierraum 112 seriell oder parallel durchströmen.

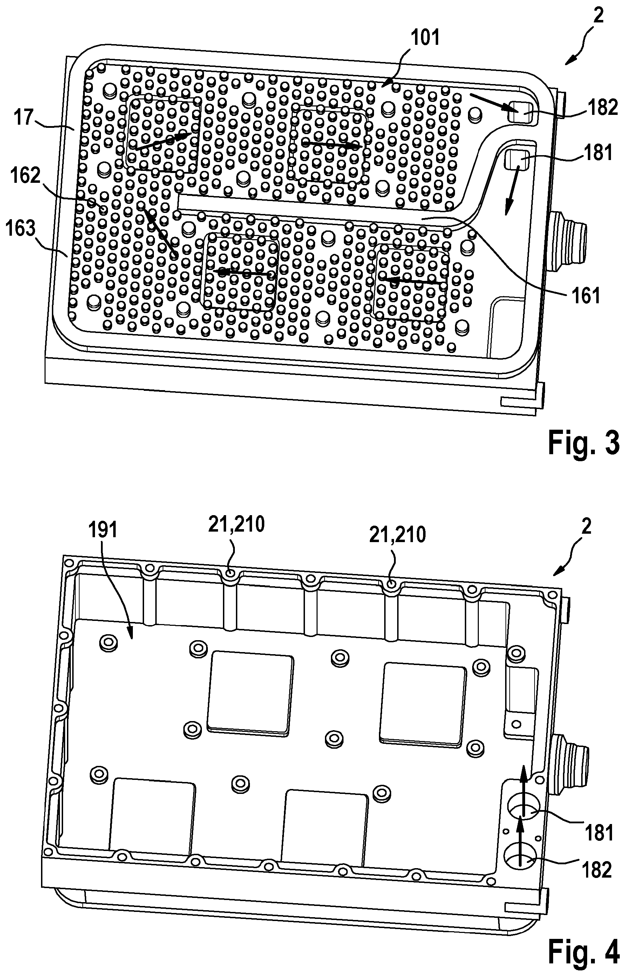

Die Figur 3 zeigt in einer perspektivischen Ansicht eine Untersicht einer Ausführungsform eines ersten Gehäuseelements 2 einer erfindungsgemäßen Batterie 1. Die Figur 4 zeigt in einer perspektivischen Ansicht eine Draufsicht der Ausführungsform des ersten Gehäuseelements 2 der erfindungsgemäßen Batterie 1. Das erste Gehäuseelement 2 soll nun anhand der Figuren 3 und 4 gemeinsam beschrieben werden.

Die Figur 3 zeigt zunächst die erste Temperierstruktur 101.

Dabei ist zu erkennen, dass die erste Temperierstruktur 101 Strömungsleitelemente 161, Strömungsstörelemente 162 und Strömungsbegrenzungen 163 umfasst. Die Temperierstruktur 101 sorgt dabei für eine Ausbildung der mit Pfeilen eingezeichneten Strömungsrichtung in dem ersten Temperierraum 111.

Weiterhin ist in der Figur 3 auch eine Verbindungsstelle 17 zur stoffschlüssigen Anbindung des Abdeckelement 14 gezeigt.

Des Weiteren zeigen die Figuren 3 und 4 auch, dass das erste Gehäuseelement 2 einen Temperierfluideinlass 181 und einen Temperierfluidauslass 182 aufweist. Der Temperierfluideinlass 181 ist dabei dazu ausgebildet, Temperierfluid in den ersten Temperierraum 111 einzulassen und der Temperierfluidauslass 182 ist dabei dazu ausgebildet, Temperierfluid aus dem ersten Temperierraum 111 auszulassen.

Aus der Figur 4 ist eine erste Innenseite 191 des Innenraums 5 zu erkennen. Die erste Innenseite 191 ist dabei unmittelbar benachbart zu der ersten Temperierstruktur 101 angeordnet, was auch aus der Figur 2 zu erkennen ist. Die Mehrzahl an Batteriezellen 7 ist dabei bei einer Ausführungsform einer erfindungsgemäßen Batterie 1 thermisch leitend mit der ersten Innenseite 191 des Innenraums 5 verbunden. Insbesondere können hieran später noch erläuterte Peltierelemente 26 angebunden sein.

Weiterhin sind aus der Figur 4 auch mögliche Verbindungselemente 21, ausgeführt als Verschraubungspunkte 210, zu einer Verbindung mit dem zweiten Gehäuseelement 3 zu erkennen.

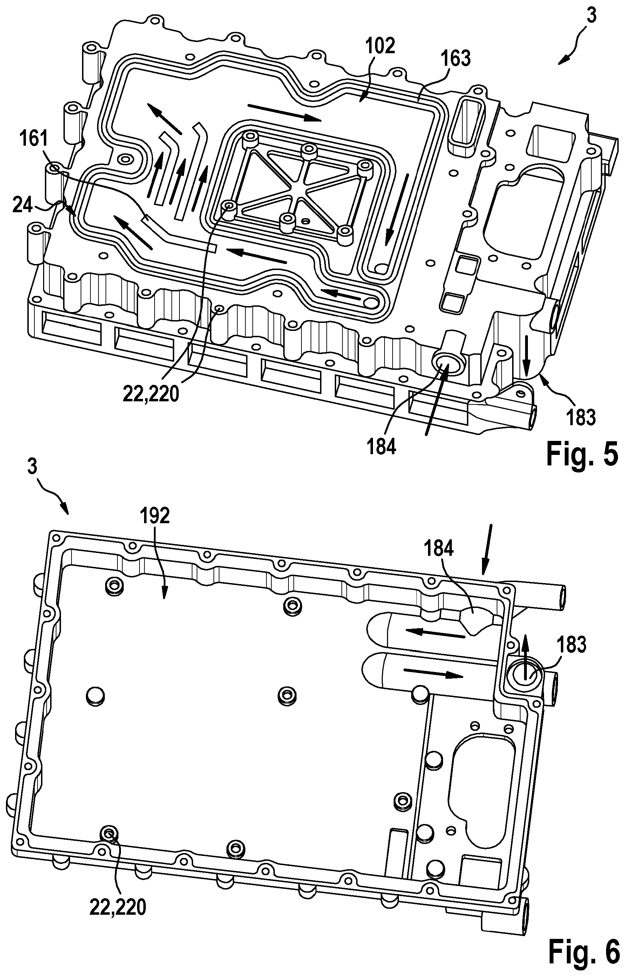

Die Figur 5 zeigt in einer perspektivischen Ansicht eine Draufsicht einer Ausführungsform eines zweiten Gehäuseelements 3 einer erfindungsgemäßen Batterie 1. Die Figur 6 zeigt in einer perspektivischen Ansicht eine Untersicht der Ausführungsform des zweiten Gehäuseelements 3 der erfindungsgemäßen Batterie 1. Anhand der Figuren 5 und 6 gemeinsam soll nun die Ausführungsform des zweiten Gehäuseelements 3 beschrieben sein.

Aus der Figur 5 ist zunächst zu erkennen, dass das zweite Gehäuseelement 3 eine zweite Temperierstruktur 102 ausbildet. Beispielsweise kann die zweite Temperierstruktur 102 Strömungsleitelemente 161 und Strömungsbegrenzungen 163 umfassen. Insbesondere kann hierdurch die mit Pfeilen eingezeichnete Strömungsführung in dem zweiten Temperierraum 1112 ausgebildet werden.

Weiterhin ist aus der Figur 5 auch zu erkennen, dass das zweite Gehäuseelement 3 einen Temperierfluideinlass 183 und einen Temperierfluidauslass 184 ausbildet. Der Temperierfluideinlass 183 ist dabei dazu ausgebildet, Temperierfluid in den zweiten Temperierraum 112 einzulassen und der Temperierfluidauslass 184 ist dabei dazu ausgebildet, Temperierfluid aus dem zweiten Temperierraum 112 auszulassen.

Der Temperierfluideinlass 183 des zweiten Gehäuseelements 3 kann beispielsweise mit dem Temperierfluidauslass 182 des ersten Gehäuseelements 2 fluidleitend verbunden sein. Dadurch kann Temperierfluid zuerst den ersten Temperierraum 111 durchströmen und anschließend den zweiten Temperierraum 112.

Weiterhin kann der Temperierfluidauslass 184 des zweiten Gehäuseelements 3 beispielsweise fluidleitend mit dem Temperierfluideinlass 181 des ersten Gehäuseelements 2 verbunden sein. Dadurch kann Temperierfluids zuerst den zweiten Temperierraum 112 durchströmen und anschließend den ersten Temperierraum 111.

Die Figur 6 zeigt eine zweite Innenseite 192 des Innenraums 5. Die zweite Innenseite 192 ist dabei unmittelbar benachbart zu dem zweiten Temperierraum 112 angeordnet. Das elektrische Bauteil 8 und/oder das elektronische Bauteile 9 sind dabei thermisch leitend mit der zweiten Innenseite 192 verbunden. Dadurch ist eine zuverlässige Temperierung möglich.

Weiterhin sind aus der Figur 6 auch mögliche Verbindungselemente 22, ausgeführt als Verschraubungspunkte 220, zu einer Verbindung mit dem dritten Gehäuseelement 4 zu erkennen.

Zudem zeigt die Figur 5 auch, dass das zweite Gehäuseelement 3 eine Aufnahme 24 für ein in der Figur 5 nicht gezeigtes Dichtelement 133 aufweist. Dadurch ist es möglich, den zweiten Temperierraum 112 zuverlässig abzudichten.

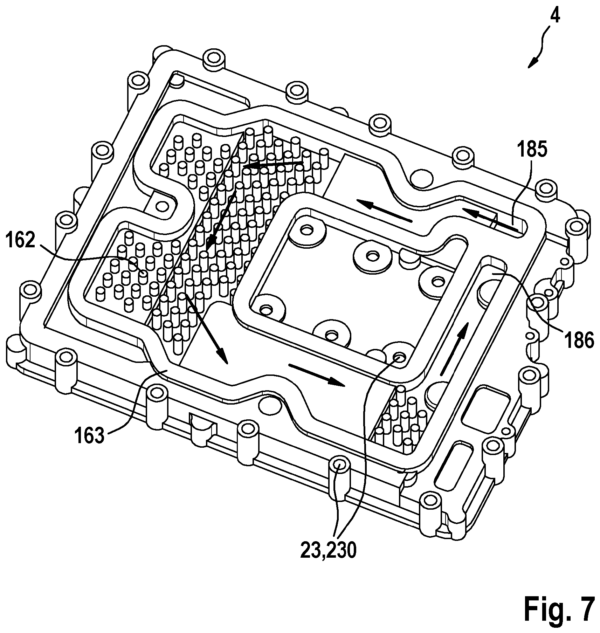

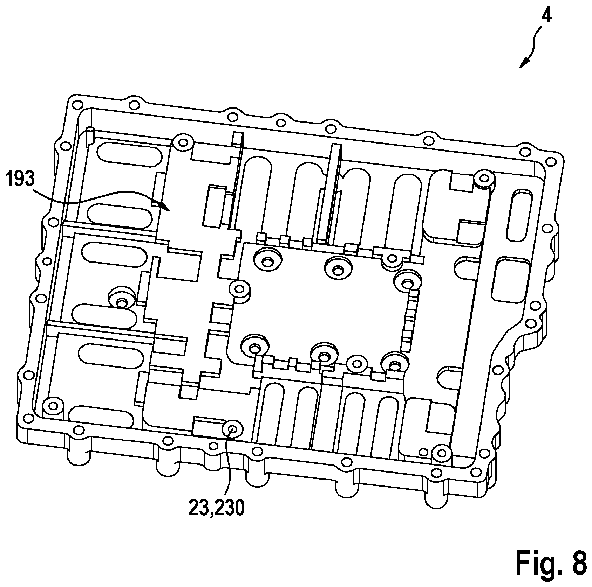

Die Figur 7 zeigt in einer perspektivischen Ansicht eine Untersicht einer Ausführungsform eines dritten Gehäuseelements 4 einer erfindungsgemäßen Batterie 1. Weiterhin zeigt die Figur 8 in einer perspektivischen Ansicht eine Draufsicht der Ausführungsform des dritten Gehäuseelements 4 der erfindungsgemäßen Batterie 1 gemäß Figur 7. Das dritte Gehäuseelement 4 soll nun anhand der Figuren 7 und 8 gemeinsam beschrieben sein.

Aus der Figur 7 ist zunächst zu erkennen, dass das dritte Gehäuseelement 4 eine dritte Temperierstruktur 103 ausbildet. Beispielsweise kann die dritte Temperierstruktur 103 Strömungsstörelemente 162 und Strömungsbegrenzungen 163 umfassen. Insbesondere kann hierdurch die mit Pfeilen eingezeichnete Strömungsführung in dem zweiten Temperierraum 112 ausgebildet werden.

Weiterhin ist aus den Figuren 7 und 8 auch zu erkennen, dass das dritte Gehäuseelement 4 ein erstes Gegenstück 185 zu dem Temperierfluideinlass 183 des zweiten Gehäuseelements 3 aufweist. Zudem weist das dritte Gehäuseelement 4 ein zweites Gegenstück 186 zu dem Temperierfluidauslass des zweiten Gehäuseelements 3 auf.

Weiterhin sind aus den Figuren 7 und 8 auch mögliche Verbindungselemente 23, ausgeführt als Verschraubungspunkte 230, zu einer Verbindung mit dem zweiten Gehäuseelement 3 zu erkennen.

Zudem zeigt die Figur 8 eine dritte Innenseite 193 des dritten Gehäuseelements 4. Die dritte Innenseite 193 des dritten Gehäuseelements 4 ist dabei unmittelbar benachbart zu dem zweiten Temperierraum 112 angeordnet. Der elektrische Spannungswandler 12 bzw. der Gleichspannungswandler 120 ist dabei thermisch leitend mit der dritten Innenseite 193 verbunden.

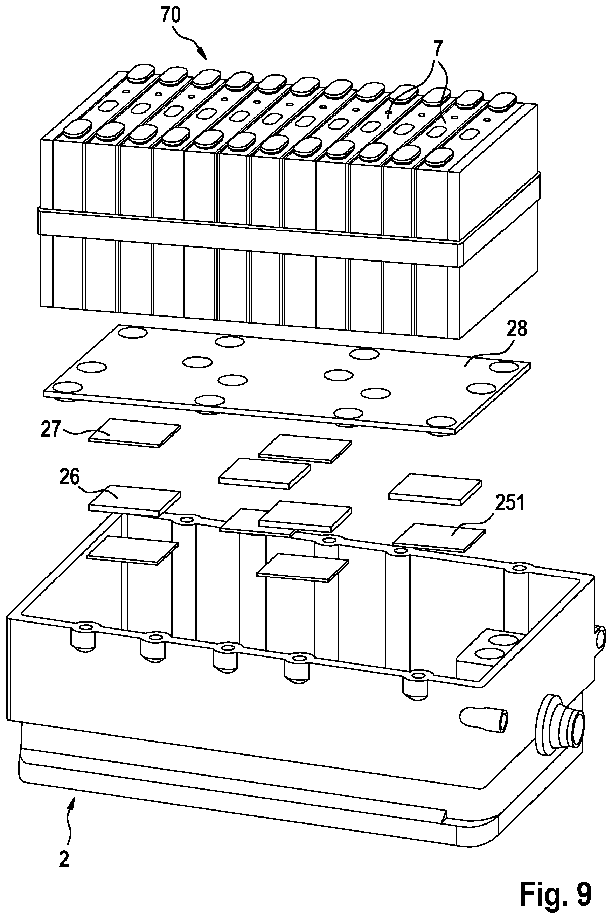

Die Figur 9 zeigt in einer perspektivischen Ansicht eine erste Explosionsdarstellung eines Ausschnitts einer erfindungsgemäßen Batterie 1.

Dabei ist das erste Gehäuseelement 2 zu erkennen. Weiterhin ist die Mehrzahl an elektrisch leitend seriell und/oder parallel miteinander verschalteten Batteriezellen 7 zu erkennen, welche in dem Innenraum 5 angeordnet werden.

Die Mehrzahl an Batteriezellen 7 kann dabei beispielsweise auch miteinander verspannt sein.

Zwischen der Mehrzahl an Batteriezellen 7 und dem ersten Gehäuseelement 2 kann weiterhin ein erstes thermisches Ausgleichselements 251 angeordnet sein.

Zudem zeigt die Figur 9 eine Ausführungsform, bei welcher zusätzlich Peltierelemente 26 angeordnet sind. Die Peltierelemente 26 werden mittels eines thermisch leitfähigen Klebstoffs 27 an eine Wärmeverteilerplatte 28 angebunden.

Die Wärmeverteilerplatte 28 dient dazu, von der Mehrzahl an Batteriezellen 7 abgeführte Wärme gleichmäßig zu verteilen, um somit eine gleichmäßige Abfuhr von Wärme ausbilden zu können. Beispielsweise kann die Wärmeverteilerplatte 28 geschraubt mit dem ersten Gehäuseelement 2 verbunden werden. Die Mehrzahl an Batteriezellen 7 kann bspw. auch geklebt mit der Wärmeverteilerplatte 28 verbunden sind.

Das erste thermische Ausgleichselement 251 ist zwischen den Peltierelementen 26 und dem ersten Gehäuseelement 2 angeordnet.

Peltierelemente 26 stellen eine Art elektrisch betriebene Wärmepumpe dar. Hierbei wird Energie in Form von Wärme von einer Seite auf die andere Seite übertragen und kann dort abgeführt werden. Das Peltierelement 26 basiert auf dem sogenannten Peltiereffekt, welcher besagt, dass Energie in Form von Wärme durch einen Stromfluss in einem Halbleiter transportiert werden kann. Dadurch entsteht eine Temperaturdifferenz auf beiden Seiten. Das Peltierelement 26 stellt also quasi eine Wärmepumpe dar, welche auf dem Transportmittel von elektrischem Strom in einem Halbleiter basiert.

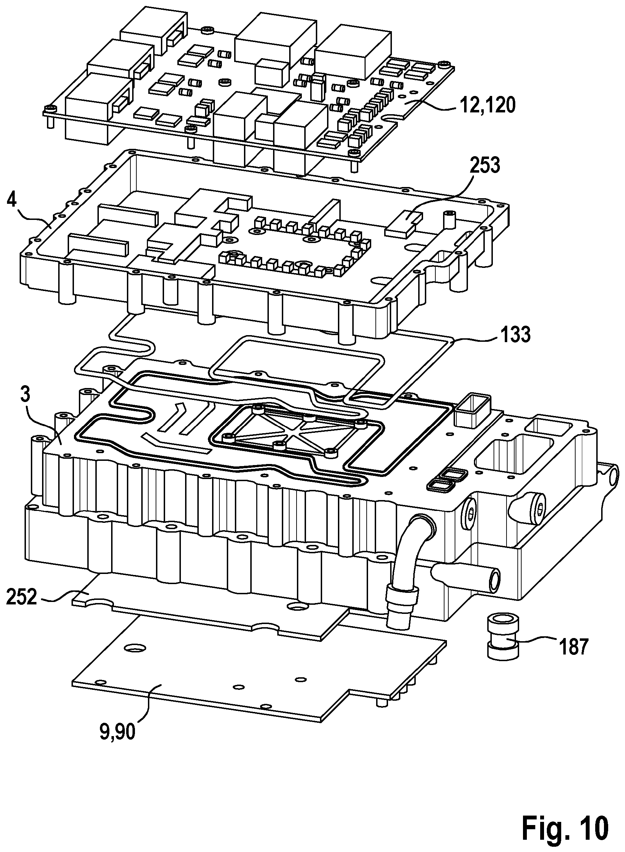

Die Figur 10 zeigt in einer perspektivischen Ansicht eine zweite Explosionsdarstellung eines Ausschnitts einer erfindungsgemäßen Batterie 1.

Dabei sind das zweite Gehäuseelement 3 und das dritte Gehäuseelement 4 zu erkennen. Weiterhin ist das dritte Dichtungselement 133 zu erkennen, welches zwischen dem zweiten Gehäuseelement 3 und dem dritten Gehäuseelement 4 angeordnet ist. Zudem zeigt die Figur 10 auch das elektrische Bauteil 8 bzw. das elektronische Bauteile 9, welches beispielsweise in eine Leiterplatte 90 integriert ist. Ferner ist aus der Figur 10 auch der elektrische Spannungswandler 12, welcher beispielsweise als Gleichspannungswandler 120 ausgebildet ist zu erkennen.

Zwischen dem elektrischen Bauteil 8 und/oder dem elektronischen Bauteil 9 bzw. der Leiterplatte 10 und dem zweiten Gehäuseelement 3 kann weiterhin ein zweites thermisches Ausgleichselements 252 angeordnet sein.

Zwischen dem elektrischen Spannungswandler 12 bzw. dem Gleichspannungswandler 120 und dem dritten Gehäuseelement 4 kann weiterhin ein drittes thermisches Ausgleichselements 253 angeordnet sein.

Zudem zeigt die Figur 10 auch ein Verbindungsstück 187, welches dazu dient, einen Temperierfluideinlass 181, 183 mit einem entsprechenden Temperierfluidauslass 182, 182 fluidleitend zu verbinden, so dass eine serielle Durchströmung des ersten Temperierraums 111 und des zweiten Temperierraums 112 ausgebildet ist.

## Patentansprüche

1. Batterie umfassend
ein erstes Gehäuseelement (2) und ein zweites Gehäuseelement (3), welche gemeinsam einen Innenraum (5) zur Aufnahme eines Batteriemoduls (6) ausbilden, wobei
in dem Innenraum (5) eine Mehrzahl an elektrisch leitend seriell und/oder parallel miteinander verschalteten Batteriezellen (7) des Batteriemoduls (6) angeordnet ist und wobei
in dem Innenraum (5) weiterhin ein erstes Element einer Batteriesteuerung angeordnet ist, wobei
das erste Gehäuseelement (2) auf einer dem Innenraum (5) und insbesondere dem zweiten Gehäuseelement (3) abgewandten Seite eine erste Temperierstruktur (101) ausbildet,
**dadurch gekennzeichnet, dass**
das zweite Gehäuseelement (3) auf einer dem Innenraum (5) und insbesondere dem ersten Gehäuseelement (2) abgewandten Seite unter Ausbildung eines von Temperierfluid durchströmbaren zweiten Temperierraums (112) mit einem dritten Gehäuseelement (4) verbunden ist, wobei
das zweite Gehäuseelement (3) eine zweite Temperierstruktur (102) ausbildet und das dritte Gehäuseelement (4) eine dritte Temperierstruktur (103) ausbildet und das zweite Gehäuseelement (3) und das dritte Gehäuseelement (4) gemeinsam den zweiten Temperierraum (112) ausbilden, wobei
das dritte Gehäuseelement (4) ein zweites Element der Batteriesteuerung aufnimmt.

2. Batterie nach dem vorherigen Anspruch 1,
**dadurch gekennzeichnet, dass**
das erste Element der Batteriesteuerung zumindest ein elektrisches Bauteil (8) und/oder zumindest ein elektronisches Bauteil (9) des Batteriemoduls (6) umfasst und dass
das zweite Element der Batteriesteuerung ein elektrischer Spannungswandler (12), insbesondere ein Gleichspannungswandler (120), ist.

3. Batterie nach dem vorherigen Anspruch 1,
**dadurch gekennzeichnet, dass**
das zweite Element der Batteriesteuerung zumindest ein elektrisches Bauteil (8) und/oder zumindest ein elektronisches Bauteil (9) des Batteriemoduls (6) umfasst und dass
das zweite Element der Batteriesteuerung ein elektrischer Spannungswandler (12), insbesondere ein Gleichspannungswandler (120), ist.

4. Batterie nach einem der vorherigen Ansprüche 1 bis 3,
**dadurch gekennzeichnet, dass**
das erste Gehäuseelement (2), das zweite Gehäuseelement (3) und/oder das dritte Gehäuseelement (4) jeweils als Druckgussgehäuse (20, 30, 40) ausgebildet sind.

5. Batterie nach einem der vorherigen Ansprüche 1 bis 4,
**dadurch gekennzeichnet, dass**
das erste Gehäuseelement (2) und das zweite Gehäuseelement (3) fluiddicht ausgebildet miteinander verbunden sind, wobei
insbesondere ein erstes Dichtungselement (131) zwischen dem ersten Gehäuseelement (2) und dem zweiten Gehäuseelement (3) angeordnet ist.

6. Batterie nach einem der vorherigen Ansprüche 1 bis 5,
**dadurch gekennzeichnet, dass**
die Mehrzahl an Batteriezellen (7) als prismatische Batteriezellen (70) ausgebildet ist.

7. Batterie nach einem der vorherigen Ansprüche 2 bis 6,
**dadurch gekennzeichnet, dass**
das elektrische Bauteile (8) des Batteriemoduls (6) ein Zellverbinder (80) und/oder eine Leitung ist und dass
das elektronische Bauteil (9) des Batteriemoduls (6) ein Schalter, ein Sicherungselement, ein Batteriesteuerungssystem und/oder ein Widerstand ist.

8. Batterie nach einem der vorherigen Ansprüche 2 bis 7,
**dadurch gekennzeichnet, dass**
das zumindest eine elektronische Bauteil (9) in eine Leiterplatte (90) integriert ist.

9. Batterie nach einem der vorherigen Ansprüche 1 bis 8,
**dadurch gekennzeichnet, dass**
ein Abdeckelement (14) unter Ausbildung eines von Temperierfluid durchströmbaren ersten Temperierraums (111) mit der ersten Temperierstruktur (101) gemeinsam an dem ersten Gehäuseelement (2) angeordnet ist.

10. Batterie nach dem vorherigen Anspruch 9,
**dadurch gekennzeichnet, dass**
die Batterie (1) einen ersten Anschluss (151) ausgebildet zu der Batterie (1) Temperierfluid zuzuführen und einen zweiten Anschluss (152) ausgebildet von der Batterie (1) Temperfluid abzuführen, wobei
die Batterie (1) in der Art ausgebildete Temperfluidführungen aufweist, dass Temperierfluid den ersten Temperierraum (111) und den zweiten Temperierraum (112) seriell oder parallel durchströmen kann.

11. Batterie nach einem der vorherigen Ansprüche 1 bis 10,
**dadurch gekennzeichnet, dass**
das Abdeckelement (14) stoffschlüssig mit dem ersten Gehäuseelement (2) verbunden ist, wobei
insbesondere weiterhin ein zweites Dichtungselement (132) zwischen dem ersten Gehäuseelement (2) und dem Abdeckelement (14) angeordnet ist, oder dass das Abdeckelement (14) durch das erste Gehäuseelement (2) ausgebildet wird.

12. Batterie nach einem der vorherigen Ansprüche 1 bis 11,
**dadurch gekennzeichnet, dass**
zwischen dem zweiten Gehäuseelement (3) und dem dritten Gehäuseelement (4) ein drittes Dichtungselement (133) angeordnet ist.

13. Batterie nach einem der vorherigen Ansprüche 1 bis 12,
**dadurch gekennzeichnet, dass**
die erste Temperierstruktur (101), die zweite Temperierstruktur (102) und/oder die dritte Temperierstruktur (103) jeweils als Strömungsleitelemente (161), als Strömungsstörrelemente (162) und/oder als Strömungsbegrenzungen (163) ausgebildet sind.

14. Batterie nach einem der vorherigen Ansprüche 1 bis 13,
**dadurch gekennzeichnet, dass**
die Mehrzahl an Batteriezellen (7) thermisch leitend mit einer unmittelbar benachbart zu der ersten Temperierstruktur (101) angeordneten ersten Innenseite (191) des Innenraums (5) verbunden ist,
das elektrische Bauteil (8) und/oder das elektronische Bauteil (9) thermisch leitend mit einer unmittelbar benachbart zu dem zweiten Temperierraum (112) angeordneten zweiten Innenseite (192) des Innenraums (5) angeordnet ist und/oder
der elektrische Spannungswandler (12) thermisch leitend mit einer unmittelbar benachbart zu dem zweiten Temperierraum (112) angeordneten dritten Innenseiten (193) des dritten Gehäuseelements (4) angeordnet ist.

15. Verwendung einer Batterie (1) nach einem der Ansprüche 1 bis 14 zur Temperierung und insbesondere zur Kühlung der Mehrzahl an Batteriezellen (7), des elektrischen Bauteils (8) und/oder das elektronischen Bauteils (9) und/oder des elektrischen Spannungswandlers (12), wobei
ein als Temperierflüssigkeit oder als Temperiergas ausgebildetes Temperierfluid die erste Temperierstruktur (111) umströmt oder wobei
das als Temperierflüssigkeit ausgebildete Temperierfluid den zweiten Temperierraum (112) durchströmt.

## Claims

1. Battery comprising
a first housing element (2) and a second housing element (3), which together form an interior space (5) for receiving a battery module (6), wherein
a plurality of battery cells (7) of the battery module (6), which are connected in an electrically conducting manner to one another in series and/or in parallel, are arranged in the interior space (5) and wherein
also arranged in the interior space (5) is a first element of a battery controller, wherein
the first housing element (2) forms a first temperature-control structure (101) on a side facing away from the interior space (5) and in particular the second housing element (3),
**characterized in that**
on a side facing away from the interior space (5) and in particular the first housing element (2), the second housing element (3) is connected to a third housing element (4), thereby forming a second temperature-control space (112) which can be flowed through by a temperature-control fluid, wherein
the second housing element (3) forms a second temperature-control structure (102) and the third housing element (4) forms a third temperature-control structure (103) and the second housing element (3) and the third housing element (4) together form the second temperature-control space (112), wherein
the third housing element (4) receives a second element of the battery controller.

2. Battery according to the preceding Claim 1,
**characterized in that**
the first element of the battery controller comprises at least one electrical component (8) and/or at least one electronic component (9) of the battery module (6) and **in that**
the second element of the battery controller is an electrical voltage converter (12), in particular a DC voltage converter (120).

3. Battery according to the preceding Claim 1,
**characterized in that**
the second element of the battery controller comprises at least one electrical component (8) and/or at least one electronic component (9) of the battery module (6) and **in that**
the second element of the battery controller is an electrical voltage converter (12), in particular a DC voltage converter (120).

4. Battery according to one of the preceding Claims 1 to 3,
**characterized in that**
the first housing element (2), the second housing element (3) and/or the third housing element (4) are each formed as diecast housings (20, 30, 40).

5. Battery according to one of the preceding Claims 1 to 4,
**characterized in that**
the first housing element (2) and the second housing element (3) are connected to one another in a fluid-tight form, wherein
in particular a first sealing element (131) is arranged between the first housing element (2) and the second housing element (3).

6. Battery according to one of the preceding Claims 1 to 5,
**characterized in that**
the plurality of battery cells (7) are formed as prismatic battery cells (70).

7. Battery according to one of the preceding Claims 2 to 6,
**characterized in that**
the electrical component (8) of the battery module (6) is a cell connector (80) and/or a line and **in that**
the electronic component (9) of the battery module (6) is a switch, a fuse element, a battery-control system and/or a resistor.

8. Battery according to one of the preceding Claims 2 to 7,
**characterized in that**
the at least one electronic component (9) is integrated in a printed circuit board (90).

9. Battery according to one of the preceding Claims 1 to 8,
**characterized in that**
a covering element (14) is arranged together with the first temperature-control structure (101) on the first housing element (2), thereby forming a first temperature-control space (111) which can be flowed through by a temperature-control fluid.

10. Battery according to the preceding Claim 9,
**characterized in that**
the battery (1) comprises a first connector (151) formed to feed temperature-control fluid to the battery (1) and a second connector (152) formed to discharge temperature-control fluid from the battery (1), wherein
the battery (1) has temperature-control fluid conduits formed in such a way that temperature-control fluid can flow through the first temperature-control space (111) and the second temperature-control space (112) in series or in parallel.

11. Battery according to one of the preceding Claims 1 to 10,
**characterized in that**
the covering element (14) is integrally connected to the first housing element (2), wherein
in particular, furthermore, a second sealing element (132) is arranged between the first housing element (2) and the covering element (14), or **in that** the covering element (14) is formed by the first housing element (2).

12. Battery according to one of the preceding Claims 1 to 11,
**characterized in that**
a third sealing element (133) is arranged between the second housing element (3) and the third housing element (4).

13. Battery according to one of the preceding Claims 1 to 12,
**characterized in that**
the first temperature-control structure (101), the second temperature-control structure (102) and/or the third temperature-control structure (103) are each formed as flow-guiding elements (161), as flow-disrupting elements (162) and/or as flow-delimiting means (163).

14. Battery according to one of the preceding Claims 1 to 13,
**characterized in that**
the plurality of battery cells (7) are connected in a thermally conducting manner to a first inner side (191) of the interior space (5) that is arranged directly adjacent to the first temperature-control structure (101),
the electrical component (8) and/or the electronic component (9) is/are arranged in thermally conducting contact with a second inner side (192) of the interior space (5) that is arranged directly adjacent to the second temperature-control space (112) and/or
the electrical voltage converter (12) is arranged in thermally conducting contact with a third inner side (193) of the third housing element (4) that is arranged directly adjacent to the second temperature-control space (112).

15. Use of a battery (1) according to one of Claims 1 to 14 for controlling the temperature and in particular cooling the plurality of battery cells (7), the electrical component (8) and/or the electronic component (9) and/or the electrical voltage converter (12), wherein
a temperature-control fluid in the form of a temperature-control liquid or a temperature-control gas flows around the first temperature-control structure (111) or wherein
the temperature-control fluid in the form of a temperature-control liquid flows through the second temperature-control space (112).

## Revendications

1. Batterie, comprenant
un premier élément de boîtier (2) et un deuxième élément de boîtier (3), lesquels forment ensemble un espace intérieur (5) destiné à recevoir un module de batterie (6),
une pluralité d'éléments de batterie (7) du module de batterie (6), connectés en série et/ou en parallèle les uns aux autres de manière électriquement conductrice, étant disposés dans l'espace intérieur (5), et
un premier élément d'une commande de batterie étant en outre disposé dans l'espace intérieur (5),
le premier élément de boîtier (2) formant une première structure de régulation de température (101) sur un côté opposé à l'espace intérieur (5) et en particulier au deuxième élément de boîtier (3),
**caractérisée en ce que**
le deuxième élément de boîtier (3), sur un côté opposé à l'intérieur (5) et en particulier au premier élément de boîtier (2), est relié à un troisième élément de boîtier (4) en formant un deuxième espace de régulation de température (112) pouvant être traversé par un fluide de régulation de température,
le deuxième élément de boîtier (3) forme une deuxième structure de régulation de température (102) et le troisième élément de boîtier (4) forme une troisième structure de régulation de température (103) et le deuxième élément de boîtier (3) et le troisième élément de boîtier (4) forment ensemble le deuxième espace de régulation de température (112)
le troisième élément de boîtier (4) reçoit un deuxième élément de la commande de batterie.

2. Batterie selon la revendication 1 précédente,
**caractérisée en ce que**
le premier élément de la commande de batterie comprend au moins un composant électrique (8) et/ou au moins un composant électronique (9) du module de batterie (6) et **en ce que**
le deuxième élément de la commande de batterie est un convertisseur de tension électrique (12), notamment un convertisseur de tension continue (120).

3. Batterie selon la revendication 1 précédente,
**caractérisée en ce que**
le deuxième élément de la commande de batterie comprend au moins un composant électrique (8) et/ou au moins un composant électronique (9) du module de batterie (6) et **en ce que**
le deuxième élément de la commande de batterie est un convertisseur de tension électrique (12), notamment un convertisseur de tension continue (120).

4. Batterie selon l'une des revendications 1 à 3 précédentes,
**caractérisée en ce que**
le premier élément de boîtier (2), le deuxième élément de boîtier (3) et/ou le troisième élément de boîtier (4) sont réalisés chacun sous forme de boîtier moulé sous pression (20, 30, 40).

5. Batterie selon l'une des revendications 1 à 4 précédentes,
**caractérisée en ce que**
le premier élément de boîtier (2) et le deuxième élément de boîtier (3) sont reliés l'un à l'autre de manière étanche aux fluides,
en particulier, un premier élément d'étanchéité (131) étant disposé entre le premier élément de boîtier (2) et le deuxième élément de boîtier (3).

6. Batterie selon l'une des revendications 1 à 5 précédentes,
**caractérisée en ce que**
la pluralité d'éléments de batterie (7) sont réalisés sous forme d'éléments de batterie prismatiques (70).

7. Batterie selon l'une des revendications 2 à 6 précédentes,
**caractérisée en ce que**
le composant électrique (8) du module de batterie (6) est un connecteur d'élément (80) et/ou une ligne et **en ce que**
le composant électronique (9) du module de batterie (6) est un commutateur, un élément fusible, un système de commande de batterie et/ou une résistance.

8. Batterie selon l'une des revendications 2 à 7 précédentes,
**caractérisée en ce que**
l'au moins un composant électronique (9) est intégré dans une carte à circuit imprimé (90).

9. Batterie selon l'une des revendications 1 à 8 précédentes,
**caractérisée en ce que**
un élément de recouvrement (14) est disposé conjointement avec la première structure de régulation de température (101) sur le premier élément de boîtier (2), en formant un premier espace de régulation de température (111) pouvant être traversé par un fluide de régulation de température.

10. Batterie selon la revendication 9 précédente,
**caractérisée en ce que**
la batterie (1) comporte un premier raccord (151) configuré pour amener du fluide de régulation de température à la batterie (1) et un deuxième raccord (152) configuré pour évacuer du fluide de régulation de température de la batterie (1),
la batterie (1) comporte des guides de fluide de régulation de température configurés de telle sorte que du fluide de régulation de température peut traverser le premier espace de régulation de température (111) et le deuxième espace de régulation de température (112) en série ou en parallèle.

11. Batterie selon l'une des revendications 1 à 10 précédentes,
**caractérisée en ce que**
l'élément recouvrement (14) est collé au premier élément boîtier (2),
en particulier, un deuxième élément d'étanchéité (132) est en outre disposé entre le premier élément de boîtier (2) et l'élément de recouvrement (14), ou **en ce que** l'élément de recouvrement (14) est formé par le premier élément de boîtier (2).

12. Batterie selon l'une des revendications 1 à 11 précédentes,
**caractérisée en ce que**
un troisième élément d'étanchéité (133) est disposé entre le deuxième élément de boîtier (3) et le troisième élément de boîtier (4).

13. Batterie selon l'une des revendications 1 à 12 précédentes,
**caractérisée en ce que**
la première structure de régulation de température (101), la deuxième structure de régulation de température (102) et/ou la troisième structure de régulation de température (103) sont réalisées chacune sous la forme d'éléments de guidage d'écoulement (161), d'éléments de perturbation d'écoulement (162) et/ou de limitations d'écoulement (163).

14. Batterie selon l'une des revendications 1 à 13 précédentes,
**caractérisée en ce que**
la pluralité d'éléments de batterie (7) sont disposés de manière thermiquement conductrice avec un premier côté intérieur (191) de l'espace intérieur (5) disposé immédiatement adjacent à la première structure de régulation de température (101),
le composant électrique (8) et/ou le composant électronique (9) est thermiquement conducteur avec un deuxième côté intérieur (192) de l'espace intérieur (5) disposé immédiatement adjacent au deuxième espace de régulation de température (112) et/ou
le convertisseur de tension électrique (12) est thermiquement conducteur avec un troisième côté intérieur (193) du troisième élément de boîtier (4) disposé immédiatement adjacent au deuxième espace de régulation de température (112).

15. Utilisation d'une batterie (1) selon l'une des revendications 1 à 14 pour la régulation de température et en particulier pour le refroidissement de la pluralité d'éléments de batterie (7), du composant électrique (8) et/ou du composant électronique (9) et/ou du convertisseur de tension électrique (12),
un fluide de régulation de température s'écoulant autour de la première structure de régulation de température (111) sous forme de liquide de régulation de température ou de gaz de régulation de température ou
le fluide de régulation de température s'écoulant à travers le deuxième espace de régulation de température (112) sous forme de liquide de régulation de température.
